# EUROPEAN PATENT APPLICATION

(11) **EP 0 576 696 A1**
(43) Date of publication of application: **05.01.1994**
(21) Application number: 92110968.2
(22) Date of filing: 29.06.1992
(51) Int. Cl.: G06F 15/66

(54) **Apparatus and method for high speed 2D/3D image transformation and display using a pipelined hardware**

(71) Applicant: International Business Machines Corporation, Armonk, N.Y. 10504 (US); IBM SEMEA S.p.A., I-20124 Milan (IT)
(72) Inventor: Pettazzi, Giancarlo, I-20127 Milan (IT); Riva, Emilio, I-22036 Erba (IT)
(74) Representative: Zerbi, Guido Maria

(57) **Abstract**

The invention relates to the definition of a specialised hardware implementing a pipeline technique to allow a host Graphic Workstation to process and display bit mapped images in real time.
This hardware engine is capable to apply a pixel by pixel transformation to a wide variety of images ( monoband, three bands like RGB, 1/2/4/8/12 bit per pixel ) and display the resulting images that should be zoomed, shrinked, rotated, panned and moved at a high display rate.
All the hardware blocks in this pipeline are fully programmable by an on-board microprocessor to allow maximum image manipulation flexibility and a wide range of image functions.
Basically the image functions supported are:
- Discrete and smooth image size magnification and reduction by bi-linear interpolation.
- 2D/3D image transformation with perspective.
- Image panning, scrolling and moving.
- Colour transformation by colour Look Up Table (CLUT) with support of a wide variety of pixel format images.
- RGB images processed at the same speed as monoband images.

## Description

The invention applies to the field of Image Processing and specifically refers to an apparatus and method for manipulating bit-mapped images with a fast hardware engine capable to process images on pixel by pixel basis and to provide image 2D/3D translation, rotation, panning, zooming and shrinking at a high speed rate due to the pipelined implementation of such hardware.

This hardware engine can be suitably interfaced to a host Graphic Workstation bus system to give this host the capability of performing 'Real Time Image Transformation and Display' function. In the intents of the present invention it means the ability of processing Monoband and Multiband images (i.e. RGB) of any size (up to 2048x2048 pixels) in few tenths of second.

It is known and usual to implement the functions provided by the present invention by software with time consuming processes.
EP-A 0367418 by J.Gonzalez-Lopez describes an hardware engine that implements an image interpolation function providing a high speed zoom capability to an image display system, using a bi-dimensional filter. The apparatus disclosed in such application employs a bi-linear interpolation algorithm implemented in the form of cascaded one-dimensional interpolation circuits. It provides a single function, that is the image magnification.

It is therefore an object of the present invention to overcome the above drawbacks of the prior art providing a high speed image processing system more flexible than the previous known similar systems due to the presence of a local microprocessor capable of handling the parameters without causing an overhead to the hardware performances and performing the functions of image 2D/3D translation, rotation, panning, zooming and shrinking. The present hardware solution allows a significant performance improvement adding the innovative solution of decomposing a complex image transformation in one or more simple passes with the aid of a Work Storage, a read path from this storage to Pixel Buffers, a Colour Look-Up Table (CLUT) function and an Average Mechanism.

Another object of the present invention is to provide a Work Storage which can be smaller than the processed image, saving in this way hardware costs. To achieve this saving the source image can be processed in several subsequent portions (called 'slices') which matches in size with the work storage size; this means that the overall passes for each image transformation must be repeated by the number of slices the image is divided by. On the other hand the work storage size is limited by the fact that it does not impact the process speed and the image quality.

It is another object of this invention to provide an apparatus and method for obtaining 2D/3D image transformation functions with improved image quality.

Another object of the present invention is the possibility to "read back" a bit mapped image from the destination pixel memory to the source memory since the channel between the two memories is bi-directional.

These and other objects, as will result evident by the description, are achieved by manipulating bit-mapped images on a pixel by pixel basis to provide 2D/3D image translation, rotation, panning, zooming and shrinking through an hardware pipeline implementation and a local microprocessor which controls the execution of the transformation without causing an overhead to the hardware performances.

Figure 1 shows how this hardware should be located inside a general purpose Graphic Workstation architecture to add this fast Image Processor to the basic graphics functions.

Figure 2 is the complete hardware diagram of the proposed invention.

Figure 3 represents one single band of the "Pixel Processor Pipeline" and is used to simplify the operation description; this is possible because in the complete fashion the single band hardware is merely triplicated to allow a RGB Image to be processed in the same time as a single band image.

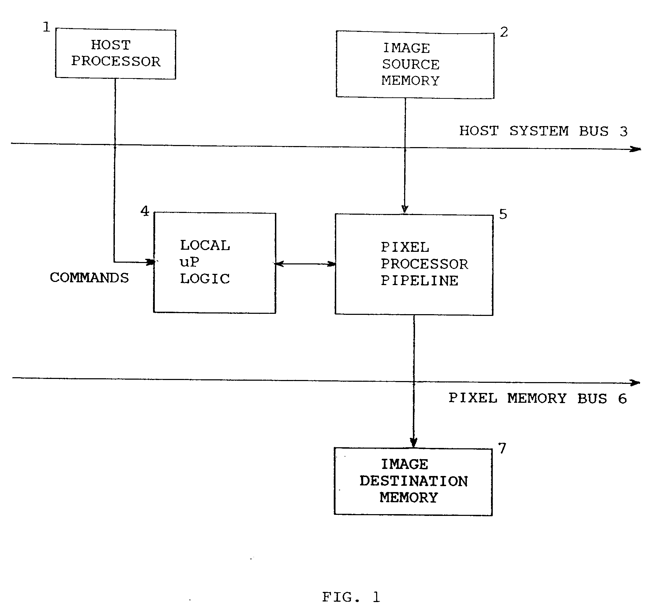

The "Image Processor" architecture in Figure 1 is comprised of two main logic blocks: Local Microprocessor Logic (4) and Pixel Processor Pipeline (5).
Main function of this hardware is the mapping of an image, through a host system bus (3), from an input window located in the image source memory (2) to an output viewport located in the image destination memory (7), through a pixel memory bus (6), applying any 2D/3D spatial transformation. Pixel by pixel processing is performed by the Pixel Processor Pipeline (5) which takes advantage of the local processor power and programming capability to achieve a high degree of function flexibility with a negligible software overhead. Local Microprocessor Logic is controlled by the Host Processor (1) commands.

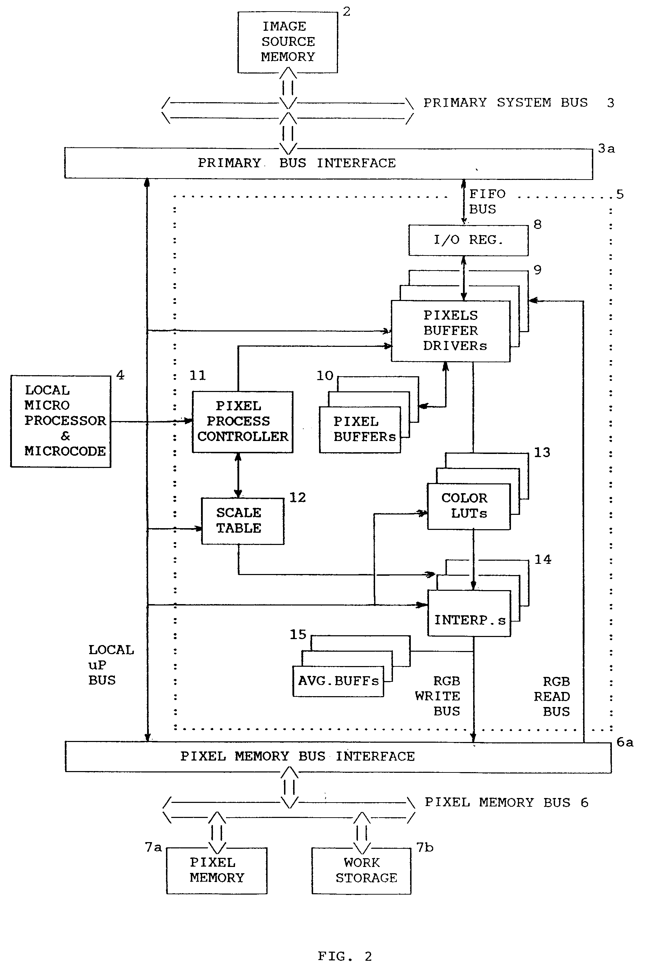

A block diagram of the Pixel Processor Pipeline (5) hardware is shown in fig. 2 in the dotted box. It is comprised of the following blocks :
The I/O Registers hardware block (8), which clocks pixel data transferred from or to the Host Bus Interface (3a).

The Pixel Processor Controller hardware block (11), which controls the transfer of image pixels during the Pipeline process. The major tasks of this module are to provide control signals for the other hardware blocks, to compute the address of the pixels stored in the Pixel Buffers (10) and to compute the coefficients required by the Interpolators (14). The calculations of the above data are based on values stored in the Scale Table (12) and also on specific parameters for the image being processed.

The Pixel Buffer Driver hardware block (9) controls the storage of the image rows coming from Image Source Memory (2) into three Pixel Buffers (10) and their transfer to the Colour Look Up Tables CLUT RAM memory (13). The main purpose of the Pixel Buffers (10) is to store pixels and combine the three colour bands so they can be processed in parallel. The sequence of pixel fetching from Image Source Memory (2) is the first row of the first band, the first row of the second band, the first row of the third band, the second row of the first band, and so on. The Pixel Buffers (10), under control of the Pixel Buffer Drivers (9), also provide the capability of re-sampling the source image data to perform the zoom and shrink functions.

The CLUT's (13) provide the image colour transformation function during the image transfer through the Pixel Processor Pipeline (5). CLUT's are loaded with the proper values for the current Image function before the pipeline process begins. The number of CLUT entries to be loaded depends on the input pixel depth (1, 2, 4, 8, 12 bit/pixel). The CLUT can be loaded by the local Processor (4). A bit in the control register provides the capability for the processor to simultaneously load the three CLUT's with equal data. In this way it is possible to speed-up the CLUT loading time when identity or gray-scale values are requested. The CLUT can also be loaded directly from the system bus under hardware control with a significant increase in total speed and overall performance. This capability is particularly suitable when more than one image viewport is being displayed at a time and each viewport has a different CLUT.

The Interpolator hardware block (14) provides continuous image zooming and shrinking in both horizontal and vertical directions simultaneously. For zooming, each new pixel is computed with an interpolation function (or replication function) between contiguous pixels in both X and Y directions. Selection between the 'interpolation' function or the 'pixel replication' function is made possible for both vertical and horizontal directions by means of suitable programming of Interpolators (14).

The Average Buffers (15) are used by the Interpolators (14) to temporarily store the intermediate results of the averaging process activated for shrinking an image without loss of information (Smooth Shrink). Shrinking an image by skipping some of the input pixels may give poor results due to the loss of information. The averaging function generates output pixels by averaging the pixel values using the arithmetic mean within a rectangular window of the source image. The window dimensions is defined by the shrink scale factor. The output pixel is the arithmetic mean of all the pixels included in the window.

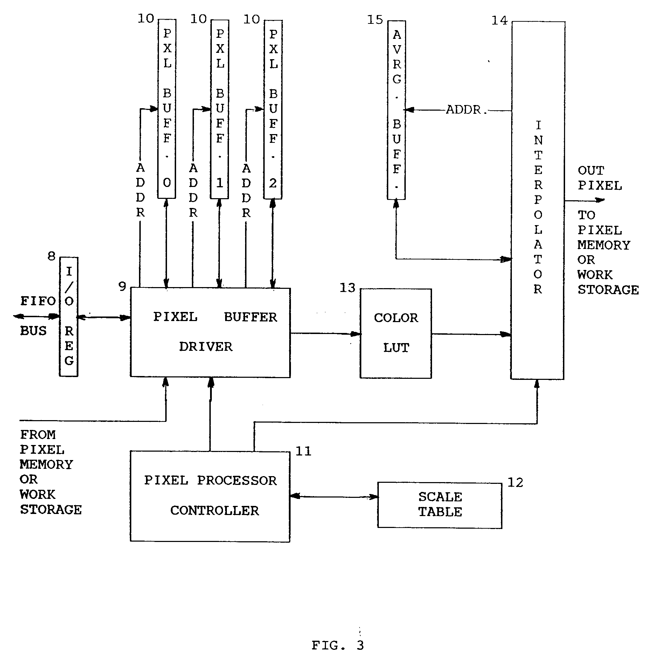

For ease of description, the Pixel Processor hardware operation for a single colour band will be referred to Figures 2 and 3 remembering that, for processing RGB images, the three colour bands work in parallel with the same pixel flux. Figure 3, in particular, represents one of the three bands having the same process flux.
The source image resides in a portion of the host memory called Image Source Memory (2). Upon a host command requiring an image transformation, the Image Source Memory is accessed by the Local Processor (4) which performs the pixels fetching following a rule that comes from the specific image transformation to be done. The fetching rule should be one of the following : 'sequential row fetching' or 'sequential column fetching'. The local microprocessor is in charge of starting the pixel stream transfer but the pixels are moved by a hardware mechanism to achieve the required speed performance. Source pixels pass through the Host Bus Interface (3a), the I/O registers (8) and the Pixel Buffer Driver (9) and are stored into the Pixel Buffers (10).

The process then continues through a pixels re-sampling from the Pixel Buffers (10), this re-sampling being controlled by the Pixel Processor Controller (11) by means of the Scale Table (12) data previously computed and stored by the Local Processor (4) for the actual transformation. The resampled pixels are sent down the pipeline through the CLUT (13) to the Interpolator (14) which generates the new pixels of the processed image.

The pixel fetching process from the source memory and the Pixel Line Buffers re-sampling operations are performed simultaneously; while a new pixel row is fetched from the source memory,the previous two rows stored in the Pixel Line Buffers are processed by the pipeline. With particular reference to Figure 3, each single band has 3 Pixel Buffers capable of storing 3 image rows, this allows the mechanism described above to take place: while one out of 3 buffers holds pixels from the current fetched row, the other two buffers hold the previous two rows which are resampled and fed down to the pipeline for processing.

Two image rows are processed by the pipeline to allow a 'bi-linear interpolation' to take place. Bi-linear interpolation works on four pixels at a time, two belonging to a first row and the other two belonging to a second row.

The colour transformation through CLUT is accomplished before the interpolation step to achieve the generation of new pixels from real colour pixels instead of from indexed values.

The new generated pixels from the interpolator go to the final Pixel Memory (7a) destination area for displaying or are temporarily stored in the Work Storage (7b) for further processing according to the required image transformation.

The Pixel Memory (7a) and the Work Storage (7b) are accessed by the Pixel Memory Bus Interface logic (6a) which is able to address those memories for both write pixel and read pixel operations. Also these memories, as the Image Source Memory (2), can be read and written in sequence 'row by row' or 'column by column': these access modes are the basic scanning mechanism required to fully support all the 2D/3D transformations.

The pipeline architecture and the availability of a Work Storage (7b) resource allow to perform multiple subprocesses (called 'passes') which work on intermediate results of subsequent image transformations.
The result of a previous pass is stored in the Work Storage (7b), then it is read back to the Pixel Line Buffers and the next pass can start with a new pipeline operation with different transformation parameters. A generic complete transformation is break down in one or more passes and the iteration of those passes is under control of the Local Processor (4). With reference to Figure 2, it is possible to see how each pass includes a write operation flow through the RGB WRITE bus (16) and a read operation flow through the RGB READ bus (17). The last pass is the final write process to the destination Pixel Memory (7a).

Once the current transformation has been logically decomposed in a number of passes by the local processor microcode which gets the function request from the host application, each single pass takes place through the same set of processes performed by the hardware pipeline but with a unique set of hardware programming parameters for each specific pass.

The process steps always performed by said pipeline for each pass are three:
1) the pixel line 'shear' operation achieved by a offset addressing of the Pixel Line Buffer under control of the Pixel Processor Controller (11);
2) the Pixel Line Buffer (10) re-sampling (addressing) operation done by the Pixel Processor Controller which computes the actual pixels addresses from the Scale Table (12) values;
3) the 'bi-linear' interpolation operation performed by the Interpolator (14) which has been programmed by the Local Processor with the actual interpolation coefficients.

A fourth process step is the average mechanism which is activated only when the current pass needs to reduce the image size without a loss of information. This operation, called 'Smooth Shrink' is done by the Interpolator (14) who needs an external memory, the Average Buffer (15), for storing the accumulated pixel values from a computed number of image source rows and columns; those values will be averaged to generate the new final pixel.

The Pixel Pipeline architecture and the flexibility made available by the local processor programming, allow any image 2D/3D transformation to take place by simply iterate an adequate number of passes each of those carried out by the same hardware process. This specific hardware achieves a speed, limited only by the pipeline clock cycle, leading to the so called 'real time' operation, while the total process time to get the final result depends on the number of passes required by the specific function: the greater is the number of passes, the longer is the process time.

Here is described an explaining but not limiting example of implementation as it has been developed for the following IBM systems: IBM 6095 Graphic Processor IBM Risc/6000 Mod. 730 This hardware implementation has been named 'Image Display Feature (IDF)'.

A Texas Instruments TMS320C25 Digital Signal Processor (DSP) is the local processor that is responsible for the overall control of the Image Display Feature hardware initialisation and operations. This processor supports real-time digital signal processing with a fast instruction cycle time of 100 nsec. The IDF microcode is loaded into the program memory during Initial Program Loading (IPL) time under the control of the host processor. Image commands and functional parameters from the host processor are stored in the Host Bus Interface memory. The DSP uses this information for calculating values for the CLUT and for initialising the IDF hardware for the next operation. The TMS320C25 DSP generates addresses for system bus operations, controls the flow of image functions, and handles internal and external interrupts. The processor has full read and write access to all hardware registers and all on-board memory.

This IDF implementation uses a total of ten 1.5 and 2 micron CMOS gate arrays. There are two Host Bus Interface chips, one Pixel Processor Controller, three Pixel Buffer Drivers, three Interpolators, and one Pixel Memory Interface.

Program and data memory are both implemented in fast access time (25 nsec) CMOS Static RAM to allow zero wait state access by the DSP. The IDF has 16K x 16 bits of program memory, three Pixel Buffers of 2K x 16 bits for each single band (total of 9 Buffers 2Kx16 bits for the 3 RGB bands), three CLUTs of 8K x 9 bits, 3 Average Buffers of 2K x 8 bits, and one Scale Table of 16K x 24 bits.

Asynchronous FIFO's are used at the Video Pixel Memory bus interface to match the IDF pipeline rate of 100 nsec with the Video Pixel Memory bus rate of 80 nsec.

## Claims

1. Apparatus for manipulating on a pixel by pixel basis through a hardware pipeline , "bit-mapped" images located in an Image Source Memory (2) and transferring said images to an Image Destination Memory (7) characterized by the fact that each element in said hardware pipeline, formed by Pixel Buffer Drivers (9), Pixel Process Controller (11), Scale Table (12), Colour Look Up Tables (13), and Interpolators (14), is programmable with specific transformation coefficients, said apparatus comprising a Local Processor (4) which divides the manipulation in single passes to be sequentially executed, said Processor (4) computing and loading said coefficients before each single pass which occurs in said hardware pipeline, the result of each single pass being stored in a Work Storage (7b) that can be read back, said result constituting the input for the next pass up to the last pass afterwords the final image is put in said Image Destination Memory (7).

2. Apparatus according to claim 1 further characterised by the presence of an average buffer (15) in which said Interpolator (14) temporarily stores the intermediate results of the averaging process activated for shrinking an image with any real value scale factor without loss of information.

3. Apparatus according to claims 1 or 2 wherein the Work Storage (7b) is smaller than the whole image to be processed insofar the image can be partitioned in slices of the global image, each of said slices being stored in said reduced work storage.

4. Method for manipulating "bit-mapped" images on a pixel by pixel basis using an hardware pipeline providing continuous image zooming, such a method being characterised in that it provides the possibility of partitioning any 2D/3D manipulation in subsequent passes each of them consisting in a transformation which occurs in said pipeline in accordance to specific parameters through the availability of a work storage including the capability of backward reading which constitutes the input for the next pass, said parameters being calculated and assigned, before each pass, by a local processor which controls the execution of the single passes of the global transformation without causing an overhead on the hardware performances, said manipulation including also an high speed rate 2D/3D image translation, rotation, panning and shrinking.

5. Method for manipulating "bit-mapped" images according to claim 4 further characterised by an additional step in the pipeline which, using a colour look-up table, provides the function of colour transformation, said step being performed before the interpolation step, so that new pixels created by the interpolator (14) depend on real colour values when entered in said interpolator.
